# EUROPEAN PATENT APPLICATION

(11) **EP 3 327 348 A1**
(43) Date of publication of application: **30.05.2018**
(21) Application number: 15898912.9
(22) Date of filing: 22.07.2015
(51) Int. Cl.: F22B 37/10, F16L 57/00

(54) **PIPE REINFORCEMENT DEVICE AND PIPE REINFORCEMENT METHOD**

(71) Applicant: The Chugoku Electric Power Co., Inc., Hiroshima-shi, Hiroshima 730-8701 (JP)
(72) Inventor: NISHIDA, Hidetaka, Hiroshima-shi Hiroshima 730-8701 (JP); MATSUMURA, Hideo, Hiroshima-shi Hiroshima 730-8701 (JP); MORISHITA, Keiji, Hiroshima-shi Hiroshima 730-8701 (JP); ARAKAWA, Daisuke, Hiroshima-shi Hiroshima 730-8701 (JP)
(74) Representative: Osha Liang
(86) International application number: PCT/JP2015/070759
(87) International publication number: WO 2017/013753

(57) **Abstract**

Solution:

A pipe reinforcement device increases a creep-fatigue life of a cylindrical pipe through which steam passes, the steam being obtained by heating water using combustion heat of a boiler, and the pipe reinforcement device includes a first reinforcement member, a second reinforcement member, and a coupling member. The first reinforcement member has a shape to be in surface contact with an outer peripheral surface corresponding to one semi-circumference of the pipe, and the first reinforcement member has a thickness that decreases toward both ends in a longitudinal direction of the pipe. The second reinforcement member has a shape to be in surface contact with an outer peripheral surface of another half of the pipe, and the second reinforcement member has a thickness that decreases toward both ends in the longitudinal direction of the pipe. The coupling member couples the first and second reinforcement members together around the pipe.

## Description

### [Technical Field]

The present disclosure relates to a pipe reinforcement device and a pipe reinforcement method.

### [Background Art]

For example, a power generation boiler installed in a thermal power plant to rotate a turbine includes: an economizer that preheats boiler feed water; a water-cooled wall that forms a housing of the boiler and converts the boiler feed water into saturated steam; a superheater that further heats the saturated steam to be converted into superheated steam; a reheater that reheats steam from the turbine to be supplied to the turbine again; and the like. The above superheater and reheater are constituted by boiler pipes made of heat-resistant steel (for example, low-alloy steel). When the power generation boiler is activated, high temperature and high pressure steam flows through the boiler pipes, and when the power generation boiler is halted, the high temperature and high pressure steam flowing through the boiler pipes stop flowing. That is, in association with the activation and halt of the power generation boiler, thermal stress is created on the boiler pipes. When the power generation boiler continues to be used over a long period of time, creep-fatigue damage is created on the boiler pipes according to the thermal stress, which may cause deformation such as bulging out of an outer peripheral surface of the boiler pipe, decreasing the thickness of the boiler pipe, and the like. Thus, to prevent an accident caused by deterioration of the boiler pipe, the deterioration condition of the boiler pipe is periodically checked, and trend management with respect to bulging out, thickness decrease, and the like as described above is implemented (for example, Patent Literature 1).

### [Citation List]

### [Patent Literature]

[PTL1] Japanese Patent Application Publication No. 2013-122411

### [Summary of Invention]

### [Technical Problem]

When the boiler pipe is diagnosed as having creep-fatigue damage progressing and a remaining life shorter than a predetermined time period, as a result of checking the deterioration condition of the boiler pipe, the corresponding part of the boiler pipe needs to be replaced with a new boiler pipe. However, such replacement of the boiler pipe requires operations of cutting and welding the boiler pipe, and thus a shutdown period of the power generation boiler may be prolonged.

Accordingly, an aspect of the present disclosure is to provide a pipe reinforcement device and a pipe reinforcement method capable of increasing a life of a pipe with creep-fatigue damage.

### [Solution to Problem]

A main aspect of the present disclosure to solve the above-described problems is a pipe reinforcement device to increase a creep-fatigue life of a cylindrical pipe through which steam passes, the steam being obtained by heating water using combustion heat of a boiler, the pipe reinforcement device including: a first reinforcement member having a shape to be in surface contact with an outer peripheral surface corresponding to one semi-circumference of the pipe, the first reinforcement member having a thickness that decreases toward both ends in a longitudinal direction of the pipe; a second reinforcement member having a shape to be in surface contact with an outer peripheral surface corresponding to another semi-circumference of the pipe, the second reinforcement member having a thickness that decreases toward both the ends in the longitudinal direction of the pipe; and a coupling member to couple the first reinforcement member and the second reinforcement member together around the pipe.

Other features of the present disclosure will become apparent from descriptions of the accompanying drawings and of the present specification.

### [Advantageous Effects]

According to the present disclosure, a life of a pipe with creep-fatigue damage can be increased, thereby being able to postpone shutdown of a boiler.

### [Brief Description of Drawings]

Fig. 1 is a diagram illustrating an overall configuration of a thermal power plant that employs a pipe reinforcement device according to an embodiment of the present disclosure.
Fig. 2 is an exploded perspective view illustrating a reinforcement device according to a first embodiment before being mounted to a straight portion of a boiler pipe.
Fig. 3 is a perspective view illustrating a reinforcement device according to a first embodiment after being mounted to a straight portion of a boiler pipe.
Fig. 4 is a plan view illustrating a reinforcement device according to a first embodiment before being mounted to a straight portion of a boiler pipe.
Fig. 5 is a plan view illustrating a reinforcement device according to a first embodiment after being mounted to a straight portion of a boiler pipe.
Fig. 6 is another plan view illustrating a reinforcement device according to a first embodiment after being mounted to a straight portion of a boiler pipe.
Fig. 7 is an exploded perspective view illustrating a reinforcement device according to a second embodiment before being mounted to an elbow portion of a boiler pipe.
Fig. 8 is a perspective view illustrating a reinforcement device according to a second embodiment after being mounted to an elbow portion of a boiler pipe.
Fig. 9 is a plan view illustrating a reinforcement device according to a second embodiment before being mounted to an elbow portion of a boiler pipe.
Fig. 10 is a plan view illustrating a reinforcement device according to a second embodiment after being mounted to an elbow portion of a boiler pipe.
Fig. 11 is another plan view illustrating a reinforcement device according to a second embodiment after being mounted to an elbow portion of a boiler pipe.
Fig. 12 is still another plan view illustrating a reinforcement device according to a second embodiment after being mounted to an elbow portion of a boiler pipe.

### [Description of Embodiment]

At least the following matters will become apparent from descriptions of the present specification and of the accompanying drawings.

### ===Overall Configuration of Thermal Power Plant===

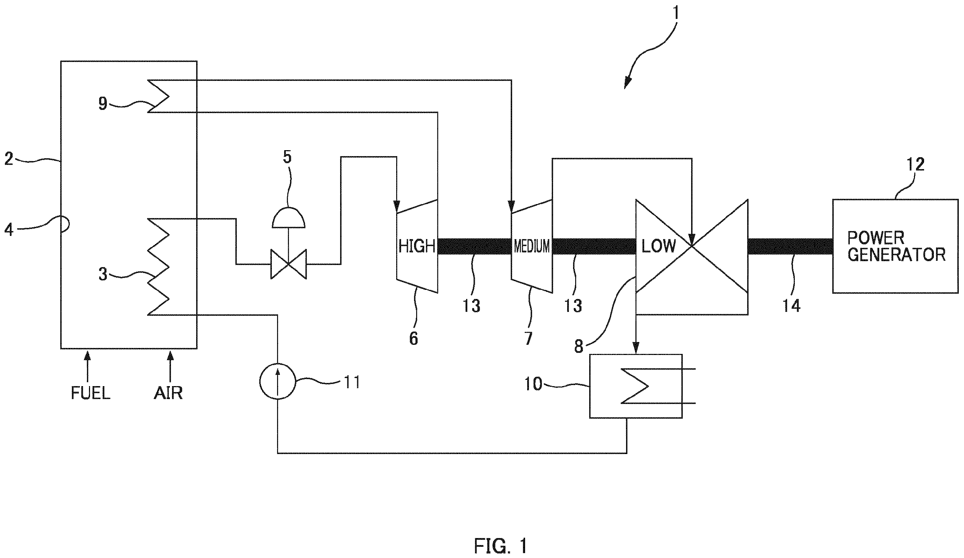

Fig. 1 is a diagram illustrating an overall configuration of a thermal power plant that employs a pipe reinforcement device according to an embodiment of the present disclosure. The overall configuration of the thermal power plant illustrated in Fig. 1 is an example for easy understanding of the description of the pipe reinforcement device according to an embodiment of the present disclosure. The pipe reinforcement device according to an embodiment of the present disclosure may be used to reinforce a boiler pipe in a thermal power plant that has a configuration different from the thermal power plant in Fig. 1. However, the pipe reinforcement device according to an embodiment of the present disclosure needs to be preliminarily designed corresponding to outer diameters of the boiler pipes installed in the thermal power plant.

A thermal power plant 1 includes a boiler 2, a steam generator 3, a water-cooled wall 4, a steam valve 5, a high-pressure turbine 6, a medium-pressure turbine 7, a low-pressure turbine 8, a reheater 9, a condenser 10, a feed pump 11, and a power generator 12.

The boiler 2 is a heat exchanger configured to mix fuel supplied from outside (for example, pulverized coal) with air, to generate combustion gas, and convert water into steam using heat (combustion heat) of the combustion gas. The boiler 2 houses the steam generator 3, the water-cooled wall 4, and the reheater 9. The steam generator 3 includes an economizer (not illustrated) configured to preheat water supplied from the condenser 10, and a superheater (not illustrated) configured to further heat saturated steam supplied from the water-cooled wall 4 to be converted into superheated steam. The water-cooled wall 4 forms a housing of the boiler 2, and converts the preheated water into the saturated steam to be supplied to the superheater. The steam valve 5 is a regulating valve configured to control a flow rate of the superheated steam generated in the steam generator 4.

The high-pressure turbine 6, the medium-pressure turbine 7, and the low-pressure turbine 8 have a rotation shaft 13 in common, and the rotation shaft 13 is coupled to a rotation shaft 14 of the power generator 12. The high-pressure turbine 6 is supplied with the superheated steam (first steam) generated in the steam generator 3 via the steam valve 5. The high-pressure turbine 6 expands the first steam, and supplies the expanded steam (second steam) to the reheater 9 in the boiler 2. The reheater 9 reheats the second steam to be supplied to the medium-pressure turbine 7 as reheated steam (third steam) . The medium-pressure turbine 7 expands the third steam, to supply the expanded steam (fourth steam) to the low-pressure turbine 8. The low-pressure turbine 8 expands the fourth steam.

The condenser 10 is configured to condense exhaust obtained after the low-pressure turbine 8 expands the fourth steam, to be converted into condensate. The feed pump 11 is configured to boost the condensate generated in the condenser 10 to be returned to the steam generator 3 in the boiler 2 as feed water.

Then, the power generator 12 is driven by power generated when the fourth steamhas been expanded, so as to generate electric power.

The above-described steam generator 3 and reheater 9 include boiler pipes (pipes) for circulating steam. The pipe reinforcement device according to an embodiment of the present disclosure is to be mounted to such boiler pipes as described above. The details thereof will be described later.

### ===Reinforcement Device for Straight portion===

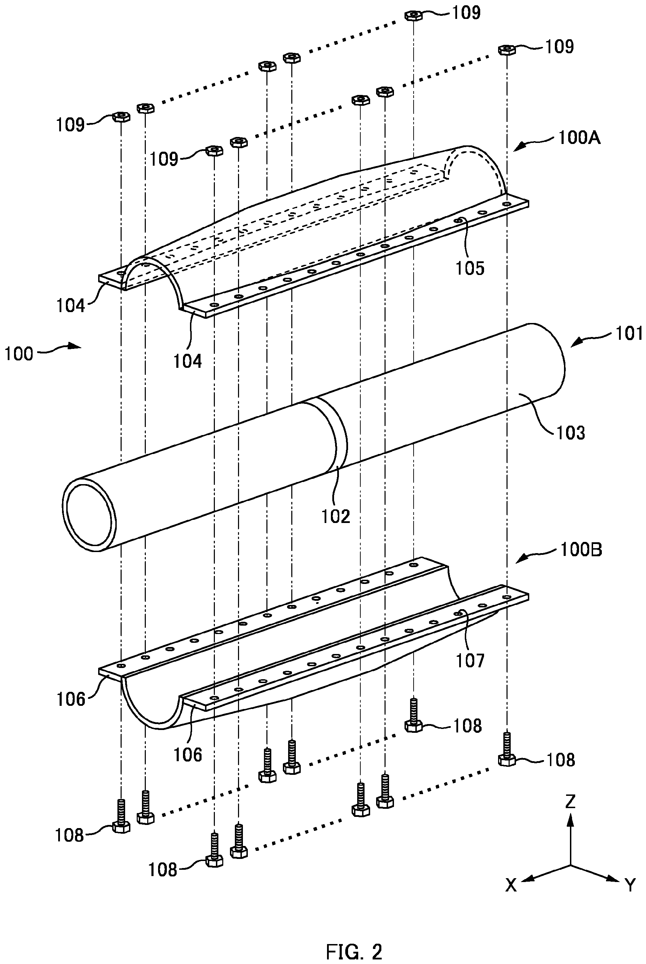

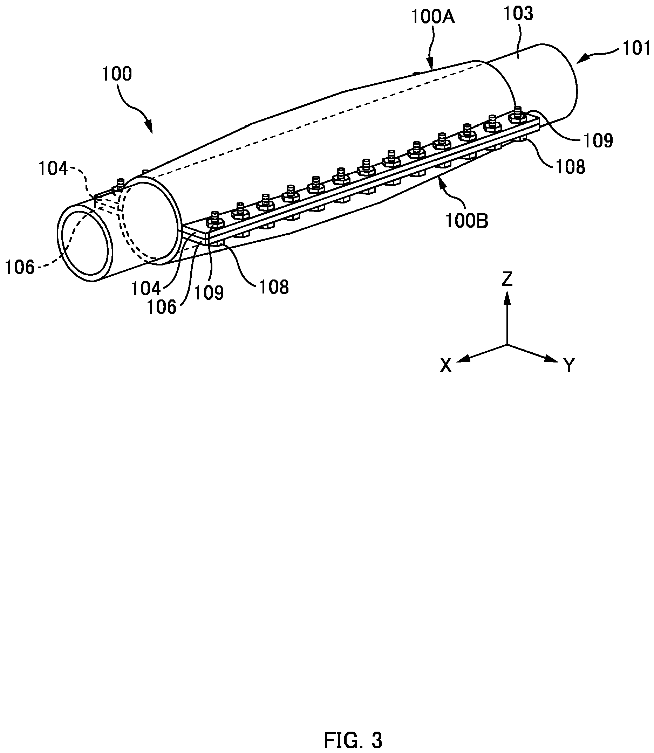

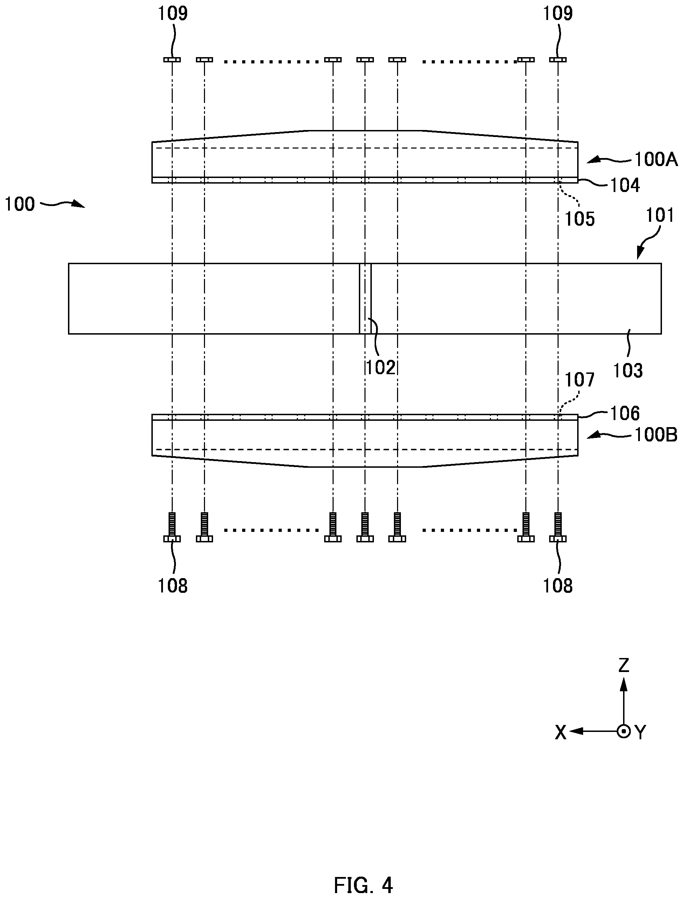

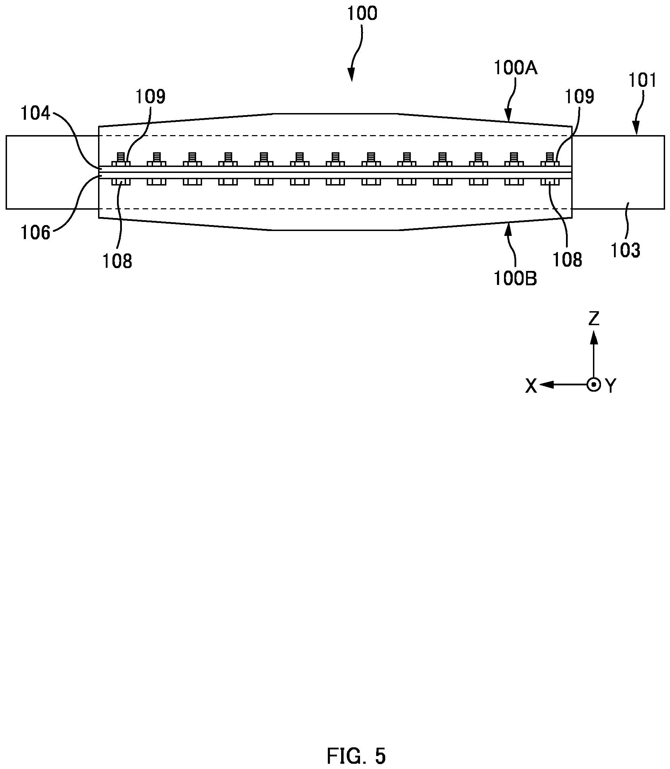

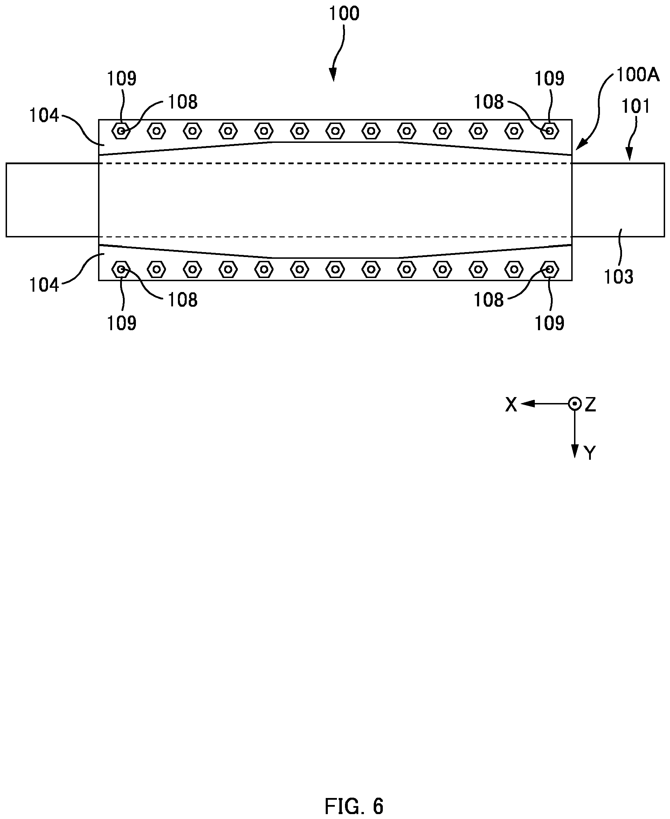

Fig. 2 is an exploded perspective view illustrating a reinforcement device according to a first embodiment before being mounted to a straight portion of a boiler pipe. Fig. 3 is a perspective view illustrating the reinforcement device according to the first embodiment after being mounted to the straight portion of the boiler pipe. Fig. 4 is a plan view illustrating the reinforcement device according to the first embodiment before being mounted to the straight portion of the boilerpipe. Fig. 5 is a plan view illustrating the reinforcement device according to the first embodiment after being mounted to the straight portion of the boiler pipe. Fig. 6 is another plan view illustrating the reinforcement device according to the first embodiment after being mounted to the straight portion of the boiler pipe. It should be noted that an X-axis is an axis along a longitudinal direction of the boiler pipe, and a YZ-plane formed with a Y-axis and a Z-axis is a surface parallel to a cross-section of the boiler pipe.

Hereinafter, the reinforcement device according to the first embodiment will be described with reference to Figs. 1 to 6.

A reinforcement device 100 according to the first embodiment is a device configured to reinforce a straight portion 101 of a boiler pipe included in the steam generator 3 or the reheater 9 illustrated in Fig. 1. The boiler pipe is made of heat-resistant steel (for example, low-alloy steel, high-alloy steel, carbon steel, and stainless steel), and the straight portion 101 has, for example, a cylindrical shape. The boiler pipe to which the reinforcement device 100 is mounted includes the straight portion 101 and a weld portion 102 that is created as a result of a welding process performed on cross-section openings of boiler pipes adjacent to each other. Then, the reinforcement device 100 includes a first reinforcement member 100A and a second reinforcement member 100B that are to be fitted tightly around an outer peripheral surface 103 of the straight portion 101.

The first reinforcement member 100A is made of heat-resistant steel (for example, stainless steel SUS316 and SUS304). The first reinforcement member 100A has a semi-cylinder shape so as to be in surface contact with the outer peripheral surface 103 of an upper (+Z-side) half of the straight portion 101 assuming that the straight portion 101 is cut along an XY-plane, formed with the X- and Y-axes, passing through the central axis of the straight portion 101. The first reinforcement member 100A has a length in a direction along the X-axis that is, for example, equal to or greater than three times the diameter of the straight portion 101, so that creep-fatigue damage and stress corrosion cracking (SCC) according to thermal stress are less likely to be generated on the straight portion 101. The first reinforcement member 100A has a thickness that decreases toward both ends from the center of the first reinforcement member 100A in the direction along the X-axis, so as to prevent the thermal stress from concentrating on both ends in the direction along the X-axis. In particular, the first reinforcement member 100A has an even thickness near the center of the first reinforcement member 100A in the direction along the X-axis, while the thickness gradually decreases, at a constant rate as in an outer peripheral surface of a cone, from positions distant from the center of the first reinforcement member 100A toward both the ends. It is assumed that the constant rate is about a rate at which the thickness decreases by approximately 5 mm with respect to a length of 100 mm in the direction along the X-axis. It is also assumed that the thickness on both ends of the first reinforcement member 100A is approximately 5 mm.

The first reinforcement member 100A is provided with first flanges 104 in the direction along the X-axis on both sides (±Y-sides) along a direction of the Y-axis. The first flanges 104 are made of heat-resistant steel (for example, stainless steel SUS316 and SUS304), and each have, for example, a long flat plate shape. The first flanges 104 include a plurality of first holes 105 drilled at substantially regular intervals in the direction along the X-axis. The first flanges 104 are integrally disposed to the first reinforcement member 100A by the welding process.

Similarly, the second reinforcement member 100B is made of heat-resistant steel (for example, stainless steel SUS316 and SUS304). The second reinforcement member 100B has a semi-cylinder shape so as to be in surface contact with the outer peripheral surface 103 of a lower (-Z-side) half of the straight portion 101 assuming that the straight portion 101 is cut along the XY-plane, formed with the X- and the Y-axes, passing through the central axis of the straight portion 101. The second reinforcement member 100B has a length in the direction along the X-axis that is, for example, equal to or greater than three times the diameter of the straight portion 101, so that creep-fatigue damage and stress corrosion cracking according to thermal stress are less likely to be generated on the straight portion 101. The second reinforcement member 100B has a thickness that decreases toward both ends from the center of the second reinforcement member 100B in the direction along the X-axis, so as to prevent the thermal stress from concentrating on both ends in the direction along the X-axis. In particular, the second reinforcement member 100B has an even thickness near the center of the second reinforcement member 100B in the direction along the X-axis, while the thickness gradually decreases, at a constant rate as in an outer peripheral surface of a cone, from positions distant from the center of the second reinforcement member 100B toward both the ends. It is assumed that the constant rate is about a rate at which the thickness decreases by approximately 5 mm with respect to a length of 100 mm in the direction along the X-axis. It is also assumed that the thickness on both ends of the second reinforcement member 100B is approximately 5 mm.

The second reinforcement member 100B includes second flanges 106 in the direction along the X-axis on both sides (±Y-sides) along the direction of the Y-axis. The second flanges 106 are made of heat-resistant steel (for example, stainless steel SUS316 and SUS304), and each have a long flat plate shape. The second flanges 106 include a plurality of second holes 107 drilled at substantially regular intervals in the direction along the X-axis. The second flanges 106 are integrally disposed to the second reinforcement member 100B by the welding process.

As apparent from the above description, the first reinforcement member 100A and the second reinforcement member 100B form a symmetrical shape when the straight portion 101 is disposed between both members 100A and 100B in such a manner as to be sandwiched therebetween. Accordingly, when the first flange 104 and the second flange 106 are aligned in a state where the first reinforcement member 100A and the second reinforcement member 100B are disposed symmetrically with respect to the straight portion 101 serving as a border, inner peripheral surfaces (surfaces on concaved sides) of the first reinforcement member 100A and the second reinforcement member 100B come in surface contact with the outer peripheral surface 103 of the straight portion 101, such that the plurality of first holes 105 and the plurality of second holes 107 are aligned without being displaced to one another. Then, after a plurality of bolts 108 are inserted into the plurality of first holes 105 and the plurality of second holes 107, a plurality of nuts 109 are screwed on the plurality of bolts 108 to be tightened. This brings a state where the first reinforcement member 100A and the second reinforcement member 100B are fitted tightly around the outer peripheral surface 103 of the straight portion 101. It should be noted that an inner diameter of the reinforcement device 100 formed by assembling the first reinforcement member 100A and the second reinforcement member 100B is maintained constant.

When the boiler 2 is activated, high temperature and high pressure steam flows through the straight portion 101, and when the boiler 2 is halted, the high temperature and high pressure steam flowing through the straight portion 101 stops flowing. The activation and halt of the boiler 2 create the thermal stress on the straight portion 101. Furthermore, the continuation of the activation and halt in the boiler 2 over a long period of time may cause the creep-fatigue damage on the straight portion 101 according to the thermal stress, or the stress corrosion cracking in the proximity of the weld portion 102. However, the employment of the reinforcement device 100 according to the first embodiment can restrain creation of creep-fatigue damage and stress corrosion cracking on the straight portion 101, thereby being able to increase the remaining life of the boiler pipe. The first reinforcement member 100A and the second reinforcement member 100B are mounted to the straight portion 101 using the bolts 108 and the nuts 109. This enables the reinforcement device 100 to be easily mounted to the straight portion 101. The degree of tightness in the bolts 108 and the nuts 109 can be adjusted according to type (material) of a boiler pipe and usage environment. This can appropriately restrain creation of creep-fatigue damage and stress corrosion cracking on the straight portion 101, thereby being able to increase the remaining life of the boiler pipe.

The first flanges 104, the second flanges 106, the bolts 108, and the nuts 109 are disposed as means for mounting the first reinforcement member 100A and the second reinforcement member 100B to the straight portion 101, however, it is not limited thereto. For example, as an alternative to the first flanges 104, the second flanges 106, the bolts 108, and the nuts 109, a copper band-shaped bar (not illustrated) can be prepared and wound around the first reinforcement member 100A and the second reinforcement member 100B over the entire circumferential area, such that the first reinforcement member 100A and the second reinforcement member 100B are mounted to the straight portion 101.

### ===Reinforcement Device for Elbow portion===

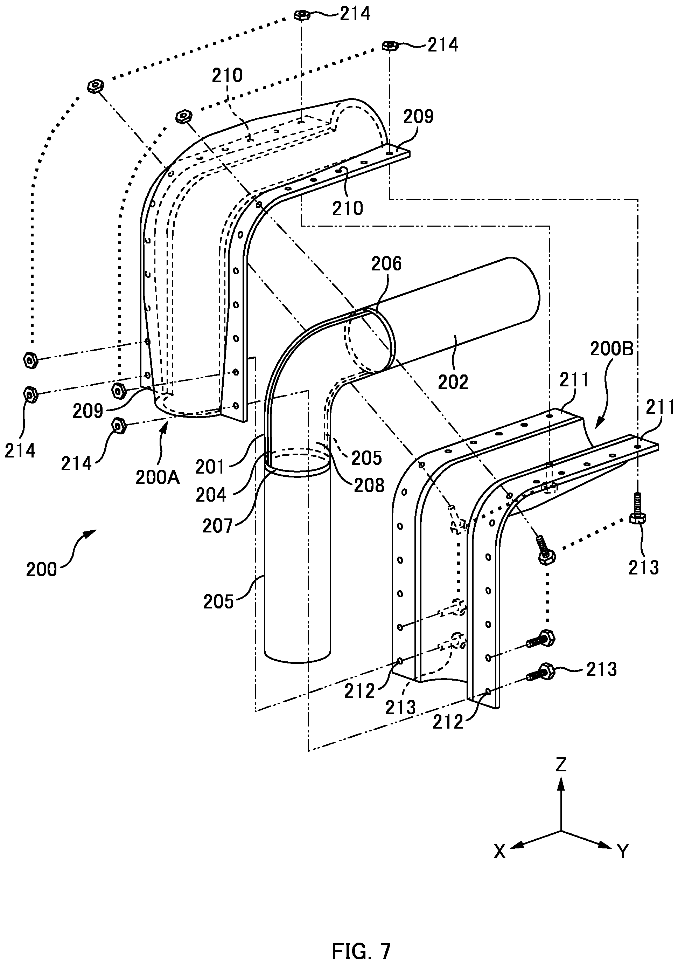

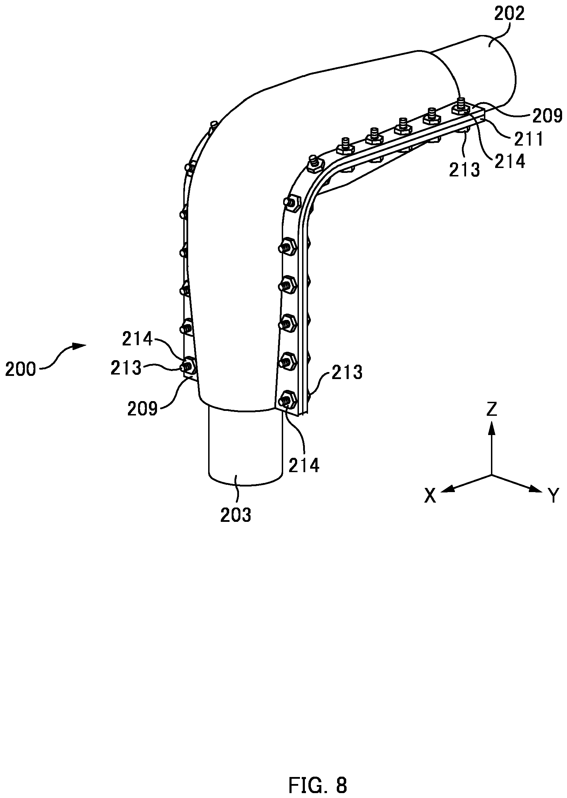

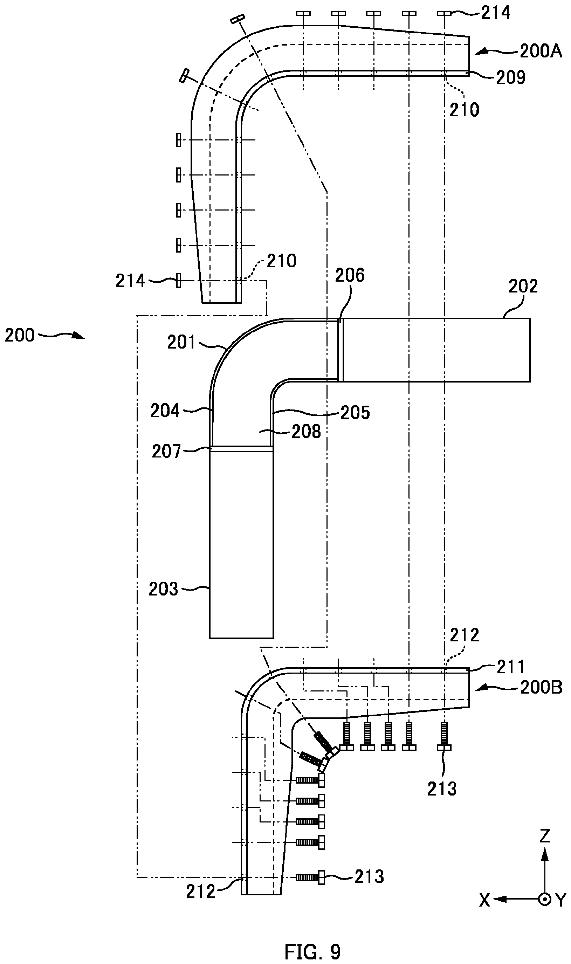

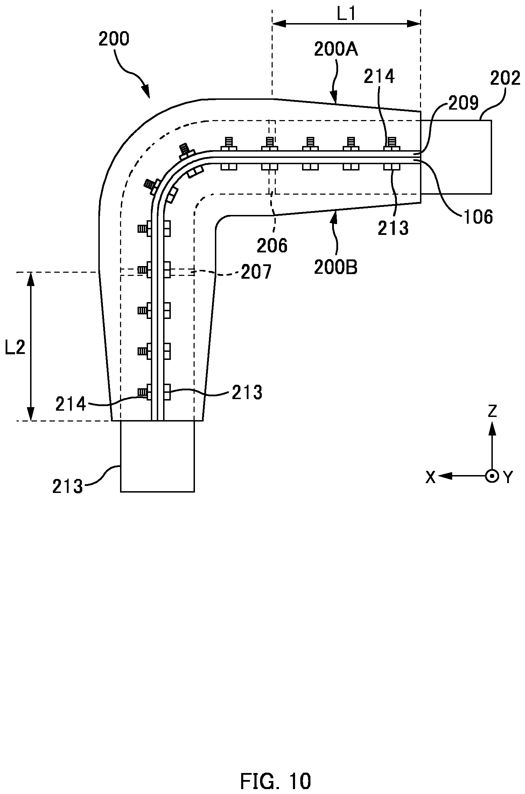

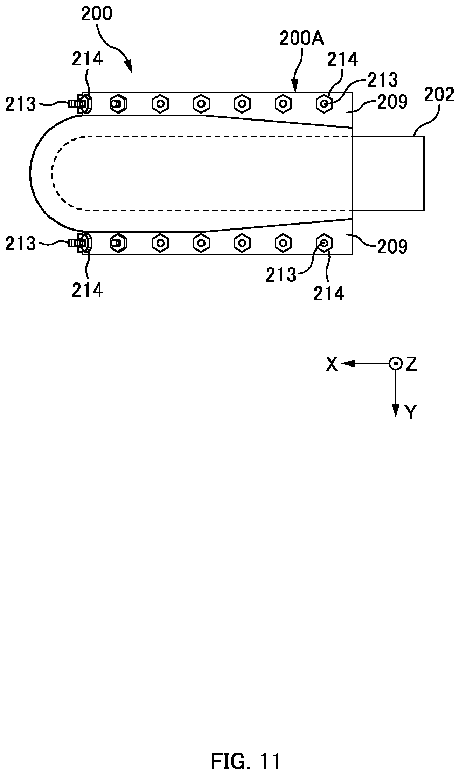

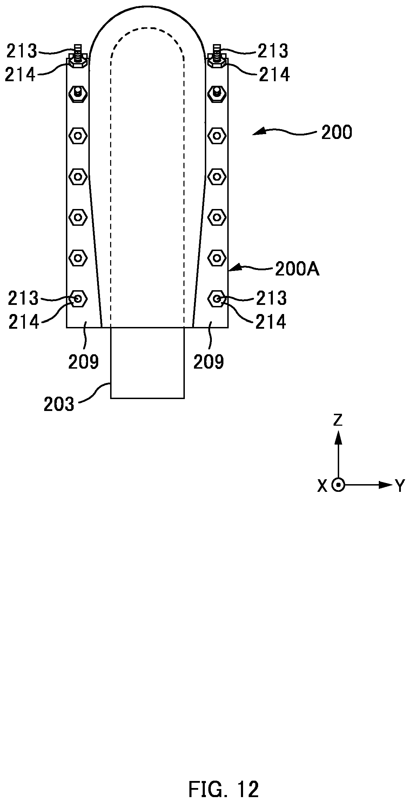

Fig. 7 is an exploded perspective view illustrating a reinforcement device according to a second embodiment before being mounted to an elbow portion of a boiler pipe. Fig. 8 is a perspective view illustrating the reinforcement device according to the second embodiment after being mounted to the elbow portion of the boiler pipe. Fig. 9 is a plan view illustrating the reinforcement device according to the second embodiment before being mounted to the elbow portion of the boiler pipe. Fig. 10 is a plan view illustrating the reinforcement device according to the second embodiment after being mounted to the elbow portion of the boiler pipe. Fig. 11 is another plan view illustrating the reinforcement device according to the second embodiment after being mounted to the elbow portion of the boiler pipe. Fig. 12 is still another plan view illustrating the reinforcement device according to the second embodiment after being mounted to the elbow portion of the boiler pipe. It should be noted that an X-axis is an axis along a longitudinal direction of one straight portion coupled to the elbow portion by the welding process, a Z-axis is an axis along a longitudinal direction of the other straight portion coupled to the elbow portion by the welding process, and a Y-axis is an axis perpendicular to an XZ-plane formed with the X-axis and the Z-axis.

Hereinafter, the reinforcement device according to the second embodiment will be described with reference to Fig. 1 and Figs. 7 to 12.

A reinforcement device 200 according to the second embodiment is a device configured to reinforce mainly an elbow portion 201 of a boiler pipe included in the steam generator 3 or the reheater 9 illustrated in Fig. 1. The boiler pipe is made of heat-resistant steel (for example, low-alloy steel, high-alloy steel, carbon steel, and stainless steel), and the elbow portion 201 has, for example, such a shape that a cylinder is bent in an L shape . The boiler pipe to which the reinforcement device 200 is mounted includes: the elbow portion 201; a part of a straight portion 202 on the side closer to the elbow portion 201; a part of a straight portion 203 on the side closer to the elbow portion 201; weld portions 204 and 205 created as a result of the welding process performed on one half piece (-Y-side) and the other half piece (+Y-side) when the elbow portion 201 is cut along the XZ-plane, formed with the X- and Z-axes, passing through the central axis of the elbow portion 201; a weld portion 206 created as a result of the welding process performed on cross-section openings of the elbow portion 201 and the straight portion 202; and a weld portion 207 created as a result of the welding process performed on cross-section openings of the elbow portion 201 and the straight portion 203. Further, the reinforcement device 200 includes a first reinforcement member 200A and a second reinforcement member 200B that are to be fitted tightly around an outer peripheral surface 208 of the elbow pipe 201 and the straight portions 202 and 203.

The first reinforcement member 200A is made of heat-resistant steel (for example, stainless steel SUS316 and SUS304). The first reinforcement member 200A has a shape in which a half cylinder is bent in an L shape so as to be in surface contact with a part of the outer peripheral surface 208 corresponding to one (+X-side to +Z-side) semi-circumference of the elbow portion 201 and the straight portions 202 and 203. The first reinforcement member 200A has a length L1, in a direction along the X-axis, of a part in surface contact with the straight portion 202. The length L1 is, for example, equal to or greater than twice the diameter of the straight portion 202, so that creep-fatigue damage and stress corrosion cracking according to bending stress and thermal stress are less likely to be created on the straight portion 202 continuous with the elbow portion 201. Similarly, the first reinforcement member 200A has a length L2, in a direction along the Z-axis, of a part in surface contact with the straight portion 203. The length L2 is, for example, equal to or greater than twice the diameter of the straight portion 203, so that creep-fatigue damage and stress corrosion cracking according to bending stress and thermal stress are less likely to be created on the straight portion 203 continuous with the elbow portion 201. The first reinforcing member 200A has a thickness at the part in surface contact with the straight portion 202 that decreases with distance from the elbow portion 201 so as to prevent thermal stress from concentrating on an end (-X-side) in the direction along the X-axis. In particular, the first reinforcement member 200A has a thickness at the part in surface contact with the straight portion 202 that gradually decreases, at a constant rate as in an outer peripheral surface of a cone, with distance from the elbow portion 201 in the direction along the X-axis. It is assumed that the constant rate is about a rate at which the thickness decreases by approximately 5 mm with respect to a length of 100 mm in the direction along the X-axis. Similarly, the first reinforcement member 200A has a thickness at the part in surface contact with the straight portion 203 that decreases with distance from the elbow portion 201, so as to prevent thermal stress from concentrating on an end (-Z-side) in the direction along the Z-axis. In particular, the first reinforcement member 200A has a thickness at the part in surface contact with the straight portion 203 that gradually decreases, at a constant rate as in an outer peripheral surface of a cone, with distance from the elbow portion 201 in the direction along the Z-axis. It is assumed that the constant rate is about a rate at which the thickness decreases by approximately 5 mm with respect to a length of 100 mm in the direction along the Z-axis. It is also assumed that the thickness on both ends of the first reinforcement member 200A is approximately 5 mm.

The first reinforcement member 200A includes first flanges 209 in the direction along the Y-axis on both sides (±Y-sides) so as to be disposed along the bent shape of the first reinforcement member 200A. The first flanges 209 are made of heat-resistant steel (for example, stainless steel SUS316 and SUS304), and each have, for example, a shape in which a long flat plate is bent in an L shape so as to be along the bent shape of the first reinforcement member 200A. The first flanges 209 include a plurality of first holes 210 drilled at substantially regular intervals in the longitudinal direction. The first flanges 209 are integrally disposed to the first reinforcement member 200A by the welding process.

Similarly, the second reinforcement member 200B is made of heat-resistant steel (for example, stainless steel SUS316 and SUS304) . The second reinforcement member 200B has a shape in which a half cylinder is bent in an L shape so as to be in surface contact with a part of the outer peripheral surface 208 corresponding to the other (-X-side to -Z-side) semi-circumference of the elbow portion 201 and the straight portions 202 and 203. The second reinforcement member 200B has a length L1' in a direction along the X-axis at the part in surface contact with the straight portion 202. The length L1' is, for example, a length (L1 = L1') equal to or greater than twice the diameter of the straight portion 202, so that creep-fatigue damage and stress corrosion cracking according to bending stress and thermal stress are less likely to be created on the straight portion 202 continuous with the elbow portion 201. Similarly, the second reinforcement member 200B has a length L2' in a direction along the Z-axis at the part in surface contact with the straight portion 203. The length L2' is, for example, at a length (L2 = L2') equal to or greater than twice the diameter of the straight portion 203, so that creep-fatigue damage and stress corrosion cracking according to bending stress and thermal stress are less likely to be created on the straight portion 203 continuous with the elbow portion 201. The second reinforcement member 200B has a thickness at the part in surface contact with the straight portion 202 that decreases with distance from the elbow portion 201 so as to prevent thermal stress from concentrating on an end (-X-side) in the direction along the X-axis. In particular, the second reinforcement member 200B has a thickness at the part in surface contact with the straight portion 202 that gradually decreases, at a constant rate as in an outer peripheral surface of a cone, with distance from the elbow portion 201 in the direction along the X-axis. It is assumed that the constant rate is about a rate at which the thickness decreases by approximately 5 mm with respect to a length of 100 mm in the direction along the X-axis. Similarly, the second reinforcement member 200B has a thickness at the part in surface contact with the straight portion 203 that decreases with distance from the elbow portion 201 so as to prevent thermal stress from concentrating on an end (-Z-side) in the direction along the Z-axis. In particular, the second reinforcement member 200B has a thickness at the part in surface contact with the straight portion 203 that gradually decreases, at a constant rate as in an outer peripheral surface of a cone, with distance from the elbow portion 201 in the direction along the Z-axis. It is assumed that the constant rate is about a rate at which the thickness decreases by approximately 5 mm with respect to a length of 100 mm in the direction along the Z-axis. It is also assumed that the thickness on both ends of the second reinforcement member 200B is approximately 5 mm.

The second reinforcement member 200B includes second flanges 211 in the direction along the Y-axis on both sides (±Y-sides) so as to be disposed along the bent shape of the second reinforcement member 200B. The second flanges 211 are made of heat-resistant steel (for example, stainless steel SUS316 and SUS304), and each have, for example, a shape in which a long flat plate is bent in an L shape so as to be along the bent shape of the second reinforcement member 200B. The second flanges 211 include a plurality of second holes 212 drilled at substantially regular intervals in the longitudinal direction. The second flanges 211 are integrally disposed to the second reinforcement member 200B by the welding process.

As apparent from the above description, when the first flange 209 and the second flange 211 are aligned via the elbow portion 201, the first reinforcement member 200A and the second reinforcement member 200B form such a shape that the first and second reinforcement members 200A and 200B are fitted tightly around the outer peripheral surface 208 of the elbow portion 201. That is, when the first flange 209 and the second flange 211 are aligned in a state where the first reinforcement member 200A and the second reinforcement member 200B are disposed so as to sandwich the elbow portion 201, inner peripheral surfaces (surfaces on concaved sides) of the first reinforcement member 200A and the second reinforcement member 200B come in surface contact with the outer peripheral surface 208 of the elbow portion 201, such that the plurality of first holes 210 and the plurality of second holes 212 are aligned without being displaced to one another. Then, after a plurality of bolts 213 are inserted into the plurality of first holes 210 and the plurality of second holes 212, a plurality of nuts 214 are screwed on the plurality of bolts 213 to be tightened. This brings a state where the first reinforcement member 200A and the second reinforcement member 200B are fitted tightly around the outer peripheral surface 208 of the elbow portion 201. It should be noted that an inner diameter of the reinforcement device 200 formed by assembling the first reinforcement member 200A and the second reinforcement member 200B is maintained constant.

The employment of the reinforcement device 200 according to the second embodiment can restrain creation of creep-fatigue damage and stress corrosion cracking on the elbow portion 201 and the straight portions 202 and 203 continuous with the elbow portion 201, thereby being able to increase the remaining life of theboilerpipe. In particular, theelbowportion201 includes four weld portions (weld portions 204 to 207) where creep-fatigue damage and stress corrosion cracking are easily created, and thus the employment of the reinforcement device 200 is greatly effective. Further, the first reinforcement member 200A and the second reinforcement member 200B are mounted to the elbow portion 201 using the bolts 213 and the nuts 214. This enables the reinforcement device 200 to be easily mounted to the elbow portion 201. Further, the degree of tightness in the bolts 213 and the nuts 214 can be adjusted according to type (material) of a boiler pipe and usage environment. This can appropriately restrain creation of creep-fatigue damage and stress corrosion cracking on the elbow portion 201, thereby being able to increase the remaining life of the boiler pipe.

The first flanges 209, the second flanges 211, the bolts 213, and the nuts 214 are disposed as means for mounting the first reinforcement member 200A and the second reinforcement member 200B to the elbow portion 201, however, it is not limited to thereto. For example, as an alternative to the first flanges 209, the second flanges 211, the bolts 213, and the nuts 214, a copper band-shaped bar (not illustrated) can be prepared and wound around the first reinforcement member 200A and the second reinforcement member 200B over the entire peripheral area, such that the first reinforcement member 200A and the second reinforcement member 200B are mounted mainly to the elbow portion 201.

As has been described above, the reinforcement device (100, 200) according to an embodiment of the present disclosure is a device to increase a creep-fatigue life of a cylindrical pipe (the straight portion 101 and the elbow portion 201 of the boiler pipe) through which steam that is obtained by heating water using combustion heat of the boiler 2 passes. The reinforcement device (100, 200) includes the first reinforcement member (100A, 200A), the second reinforcement member (100B, 200B), and the coupling member (the first flanges 104 and 209, the second flanges 106 and 211, the bolts 108 and 213, and the nuts 109 and 214). The first reinforcement member (100A, 200A) has a shape to be in surface contact with the outer peripheral surface corresponding to one semi-circumference of the pipe (101, 201), and has a thickness that decreases toward both ends in the longitudinal direction of the pipe (101, 201). The second reinforcement member (100B, 200B) has a shape to be in surface contact with the outer peripheral surface corresponding to the other semi-circumference of the pipe (101, 201), and has a thickness that decreases toward both ends in the longitudinal direction of the pipe (101, 201). The coupling member (the first flanges 104 and 209, the second flanges 106 and 211, the bolts 108 and 213, and the nuts 109 and 214) is configured to couple the first reinforcement member (100A, 200A) and the second reinforcement member (100B, 200B) together around the pipe (101, 201).

In the reinforcement device (100, 200) according to an embodiment of the present disclosure, the first reinforcement member (100A, 200A) and the second reinforcement member (100B, 200B) each have a thickness that decreases at a constant rate toward both ends in the longitudinal direction of the pipe (101, 201) .

In the reinforcement device 100 according to an embodiment of the present disclosure, when the first reinforcement member 100A and the second reinforcement member 100B are used to reinforce the straight portion 101, the first reinforcement member 100A and the second reinforcement member 100B each have a length, in the longitudinal direction of the straight portion 101, that is equal to or greater than three times the diameter of the straight portion 101.

In the reinforcement device 100 according to an embodiment of the present disclosure, when the first reinforcement member 200A and the second reinforcement member 200B are used to reinforce the elbow portion 201, the first reinforcement member 200A and the second reinforcement member 200B each have a length, in the longitudinal direction of the elbow portion 201, that is longer than the length of the elbow portion 201.

In the reinforcement device 200 according to an embodiment of the present disclosure, the elbow portion 201 has both ends each coupled to the straight portion 202, 203, and the first reinforcement member 200A and the second reinforcement member 200B each have a length contacting the straight portion 202, 203, in a length in the longitudinal direction of the pipe, that is equal to or greater than twice the diameters of the straight portion 202, 203.

In the reinforcement device 200 according to an embodiment of the present disclosure, the first reinforcement member 200A and the second reinforcement member 200B each have a thickness that decreases with distance from the elbow portion 201.

In the reinforcement device (100, 200) according to an embodiment of the present disclosure, the coupling member includes the first flanges (104, 209), the second flanges (106, 211), the plurality of bolts (108, 213), and the plurality of nuts (109, 214). The first flanges (104, 209) are disposed, on both sides of the first reinforcement member (100A, 200A), along the longitudinal direction of the pipe (101, 201), and the first flanges (104, 209) have the plurality of first holes (105, 210). The second flanges (106, 211) are disposed, on both sides of the second reinforcement member (100B, 200B), along the longitudinal direction of the pipe (101, 201), and the second flanges (106, 211) have the plurality of second holes (107, 212) . The plurality of bolts (108, 213) is to be inserted into the plurality of first holes (105, 210) and the plurality of second holes (107, 212), in the state where the first flanges (104, 209) and the second flanges (106, 211) are aligned. Theplurality of nuts (109, 214) is to be screwed on the plurality of bolts (108, 213).

In the reinforcement device (100, 200) according to an embodiment of the present disclosure, the coupling member may be the band-shaped bar (not illustrated) configured to be wound around the peripheral areas of the first reinforcement member (100A, 200A) and the second reinforcement member (100B, 200B) as an alternative to the above coupling member(s).

In the reinforcement device (100, 200) according to an embodiment of the present disclosure, the first reinforcement member (100A, 200A) and the second reinforcement member (100B, 200B) are made of stainless steel such as SUS316 and SUS304.

Employment of the reinforcement device (100, 200) according to an embodiment of the present disclosure can prevent thermal stress from concentrating on the pipe (101, 201), thereby being able to increase the life of the pipe (101, 201) that is associated with creep-fatigue.

The embodiments are intended for easy understanding of the present disclosure and are not in any way to be construed as limiting the present disclosure. The present disclosure may be modified and improved without departing from the scope of the disclosure, and equivalents thereof are also encompassed by the disclosure.

For example, a case where the reinforcement device according to an embodiment of the present disclosure is employed in the boiler pipes in the thermal power plant has been described, however, employment thereof in boiler pipes installed in a nuclear power plant and a chemical plant can provide similar effects as in the embodiments according to the present disclosure.

### [Reference Signs List]

- 1: thermal power plant
- 2: boiler
- 3: steam generator
- 9: reheater
- 100, 200: reinforcement device
- 100A, 200A: first reinforcement member
- 100B, 200B: second reinforcement member
- 101, 202, 203: straight portion
- 102, 204 to 207: weld portion
- 103, 208: outer peripheral surface
- 104, 209: first flange
- 105, 210: first hole
- 106, 211: second flange
- 107, 212: second hole
- 108, 213: bolt
- 109, 214: nut
- 201: elbow portion

## Claims

1. A pipe reinforcement device to increase a creep-fatigue life of a cylindrical pipe through which steam passes, the steam being obtained by heating water using combustion heat of a boiler, the pipe reinforcement device comprising:
a first reinforcement member having a shape to be in surface contact with an outer peripheral surface corresponding to one semi-circumference of the pipe, the first reinforcement member having a thickness that decreases toward both ends in a longitudinal direction of the pipe;
a second reinforcement member having a shape to be in surface contact with an outer peripheral surface corresponding to another semi-circumference of the pipe, the second reinforcement member having a thickness that decreases toward both the ends in the longitudinal direction of the pipe; and
a coupling member to couple the first reinforcement member and the second reinforcement member together around the pipe.

2. The pipe reinforcement device according to claim 1, wherein
the first reinforcement member and the second reinforcement member each have a thickness that decreases at a constant rate toward both ends in the longitudinal direction of the pipe.

3. The pipe reinforcement device according to claim 1 or 2, wherein
when the first reinforcement member and the second reinforcement member are used to reinforce a straight portion of the pipe, the first reinforcement member and the second reinforcement member each have a length, in the longitudinal direction of the pipe, that is equal to or greater than three times a diameter of the pipe.

4. The pipe reinforcement device according to claim 1 or 2, wherein
when the first reinforcement member and the second reinforcement member are used to reinforce an elbow portion of the pipe, the first reinforcement member and the second reinforcement member each have a length, in the longitudinal direction of the pipe, that is longer than a length of the elbow portion.

5. The pipe reinforcement device according to claim 4, wherein:
the elbow portion has both ends each coupled to the straight portion of the pipe, and
the first reinforcement member and the second reinforcement member each have a length contacting the straight portion, in a length in the longitudinal direction of the pipe, that is equal to or greater than three times a diameter of the pipe.

6. The pipe reinforcement device according to claim 4 or 5, wherein
the first reinforcement member and the second reinforcement member each have a thickness that decreases with distance from the elbow portion.

7. The pipe reinforcement device according to any one of claims 1 to 6, wherein
the coupling member includes:
first flanges disposed, on both sides of the first reinforcement member, along the longitudinal direction of the pipe, the first flanges having a plurality of first holes;
second flanges disposed, on both sides of the second reinforcement member, along the longitudinal direction of the pipe, the second flanges having a plurality of second holes;
a plurality of bolts to be inserted into the plurality of first holes and the plurality of second holes in a state where the first flanges and the second flanges are aligned; and
a plurality of nuts to be screwed on the plurality of bolts.

8. The pipe reinforcement device according to any one of claims 1 to 6, wherein
the coupling member includes a band-shaped bar configured to be wound around peripheral areas of the first reinforcement member and the second reinforcement member.

9. The pipe reinforcement device according to any one of claims 1 to 8, wherein
the first reinforcement member and the second reinforcement member are made of stainless steel.

10. A pipe reinforcement method for increasing a creep-fatigue life of a cylindrical pipe through which steam passes, the steam being obtained by heating water using combustion heat of a boiler, the pipe reinforcement method comprising:
coupling a first reinforcement member and a second reinforcement member together with a coupling member, the first reinforcement member having a shape to be in surface contact with an outer peripheral surface corresponding to one semi-circumference of the pipe, the first reinforcement member having a thickness that decreases toward both ends in a longitudinal direction of the pipe, the second reinforcement member having a shape to be in surface contact with an outer peripheral surface corresponding to another semi-circumference of the pipe, the second reinforcement member having a thickness that decreases toward both ends in the longitudinal direction of the pipe.
